# FASCICULE DE BREVET EUROPEEN

(11) **EP 0 430 759 B1**
(45) Date de publication et mention de la délivrance du brevet: **23.08.1995**
(21) Numéro de dépôt: 90403263.8
(22) Date de dépôt: 19.11.1990
(51) Int. Cl.: B60T 7/08, B62D 65/00

(54) **Dispositif de commande pour l'actionnement d'un frein de stationnement d'un véhicule automobile**
Fahrzeugfeststellbremssteuervorrichtung
Motor vehicle parking brake control

(30) Priorité: 28.11.1989 FR 8915648
(43) Date de publication de la demande: 05.06.1991
(73) Titulaire: AUTOMOBILES PEUGEOT, 75116 Paris (FR); AUTOMOBILES CITROEN, 92200 Neuilly-sur-Seine (FR)
(72) Inventeur: Pajot, Jean-Claude, F-95430 Auvers Sur Oise (FR)
(74) Mandataire: Beauchamps, Georges

(56) Documents cités:
- DE-A- 3 214 955
- FR-A- 2 582 272

## Description

La présente invention concerne un dispositif de commande d'un frein de stationnement d'un véhicule automobile.

On connaît un dispositif de commande du type comprenant un levier de manoeuvre monté pivotant sur un axe fixe et exerçant dans un sens de pivotement une traction sur un câble relié à l'organe à actionner et un secteur denté fixe centré sur l'axe de pivotement du levier de commande et coopérant avec un cliquet monté pivotant sur le levier de commande de façon à assurer le maintien angulaire de ce levier entre une position approximativement horizontale de repos et une position inclinée d'actionnement de l'organe.

Cependant, ce dispositif connu pose un problème de montage de celui-ci dans l'habitacle du véhicule. En effet, il est nécessaire de prévoir un trou dans le plancher du véhicule pour le passage du levier de manoeuvre et d'au moins une partie de son support. Ce trou de passage doit ainsi être de dimensions relativement importantes du fait que même en position inclinée de serrage du frein, le levier de manoeuvre présente relativement au plancher du véhicule un angle d'inclinaison n'excédant pas environ 45°.

FR-A-2 582 272 décrit un levier de commande de frein à main agencé pour résoudre le problème ci-dessus exposé au moyen de deux cliquets coopérant respectivement avec deux secteurs dentés, un système à ressort pour le rattrapage de jeu de timonerie et un outil pour déverrouiller l'un des cliquets.

Cependant, cette solution connue est mécaniquement complexe et n'est pas aisément automatisable.

La présente invention a pour but d'éliminer les inconvénients ci-dessus en proposant un dispositif de commande de frein à main de stationnement d'un véhicule automobile tel qu'il puisse être mis en place dans l'habitacle du véhicule par des moyens automatiques en ne nécessitant qu'un trou de passage dans le plancher de dimensions relativement réduites et qui est très simple.

A cet effet, le dispositif de commande d'un frein de stationnement d'un véhicule conforme à l'invention, du type comprenant un levier de manoeuvre monté pivotant sur un axe fixe et exerçant dans un sens de pivotement une traction sur un câble relié au frein par l'intermédiaire d'un secteur pivotant sur l'axe de pivotement du levier de manoeuvre et auquel est accroché le câble, et un secteur denté fixe centré sur l'axe de pivotement du levier de manoeuvre et coopérant avec un cliquet pivotant sur le levier de manoeuvre de façon à assurer le maintien angulaire de ce dernier en une position approximativement horizontale de repos et une position inclinée d'actionnement du frein, le levier de manoeuvre étant, avant et lors du montage du dispositif sur le véhicule, immobilisé en une position haute approximativement verticale par le cliquet, et après ce montage, abaissé, après dégagement du cliquet du secteur denté fixe, vers sa position de repos, est caractérisé en ce qu'il comprend des moyens de verrouillage mécanique solidarisant automatiquement de manière irréversible le levier de manoeuvre au secteur porte-câble lorsque le levier de manoeuvre est abaissé à sa position de repos.

Selon une caractéristique de l'invention, les moyens de verrouillage mécanique comprennent au moins une patte solidaire du secteur porte-câble, à bord incliné formant rampe s'engageant dans une échancrure d'une partie extrême déformable élastiquement du levier de manoeuvre.

Avantageusement, les moyens de verrouillage comprennent deux pattes à bords inclinés formant rampes solidaires de part et d'autre du secteur porte-câble et s'engageant respectivement dans deux échancrures de deux parties extrêmes parallèles élastiquement déformables du levier de manoeuvre.

Selon une variante de réalisation, les moyens de verrouillage comprennent au moins une lame flexible fixée à une partie extrême du levier de manoeuvre et ayant son extrémité libre en forme de crochet de verrouillage ou comportant une pièce rapportée de verrouillage pouvant respectivement s'accrocher à un bord du secteur porte-câble ou s'engager dans une ouverture du secteur porte-câble.

Avantageusement, on prévoit deux lames flexibles respectivement à deux parties extrêmes sensiblement parallèles du levier de manoeuvre et ayant chacune une extrémité libre en forme de crochet de verrouillage ou comportant une pièce rapportée de verrouillage pouvant respectivement s'accrocher à un bord correspondant du secteur porte-câble ou s'engager dans une ouverture correspondante de ce secteur.

Selon toujours une autre caractéristique de l'invention, des moyens de maintien du secteur porte-câble en position d'actionnement du frein lorsque le levier de manoeuvre est en position haute comprennent des organes de butée constitués par deux ergots de butée solidaires du secteur porte-câble et une face de butée du levier de manoeuvre sur laquelle sont maintenus en appui, par la tension exercée par le câble au secteur porte-câble, les deux ergots de butée.

Le levier de manoeuvre comprend une butée venant en appui sur une face de butée correspondante du secteur denté de façon à limiter la levée du levier vers sa position haute.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention, et dans lesquels:
La figure 1 représente schématiquement une vue de profil d'un dispositif de commande conforme à l'invention en position de montage;
La figure 2 est une vue semblable à la figure 1 mais représentant le levier de manoeuvre du dispositif de l'invention en position de repos;
La figure 3 est une vue semblable à la figure 1 mais représentant le levier de manoeuvre du dispositif de l'invention en position inclinée maximale d'actionnement d'un frein de stationnement;
La figure 4 est une vue en coupe suivant la ligne IV-IV de la figure 2;
La figure 5 est une vue en section suivant la ligne V-V de la figure 2;
Les figures 6A et 6B sont des vues en section semblables à celle de la figure 5 et relatives à un troisième mode de réalisation de verrouillage du levier de manoeuvre à un secteur porte-câble du dispositif de l'invention.
Les figures 7A et 7B sont des vues en section semblables à celle de la figure 5 et relatives à un troisième mode de réalisation de verrouillage du levier de manoeuvre au secteur porte-câble.

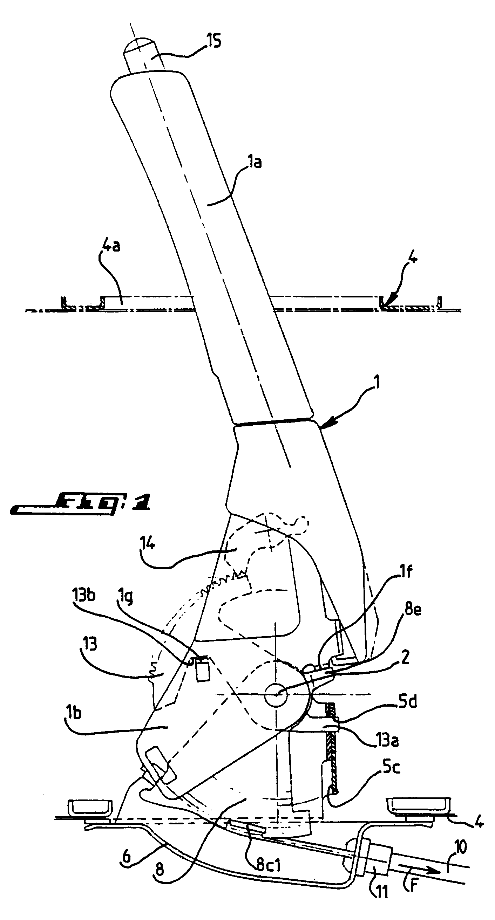

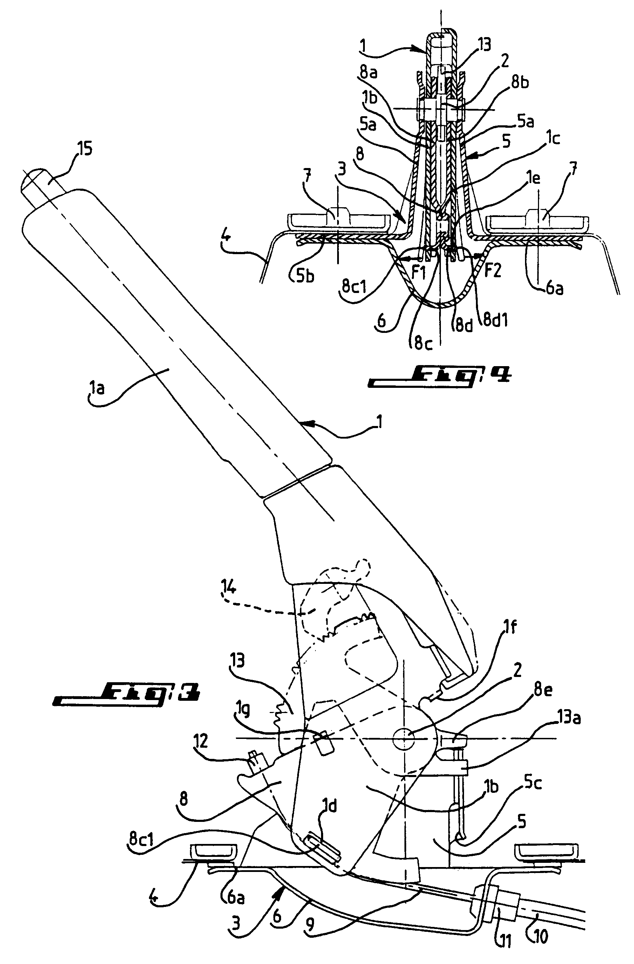

En se reportant aux figures 1 à 5, le dispositif de commande, qui sera décrit comme actionnant un frein de stationnement d'un véhicule (non représenté), comprend un levier de manoeuvre 1 monté pivotant sur un axe fixe 2 porté par un support 3 fixé, en position de montage du dispositif, à une partie de plancher du véhicule telle que le tunnel 4 s'étendant longitudinalement dans l'habitacle du véhicule. Le support 3 est constitué d'une partie supérieure 5 faisant saillie dans l'habitacle du véhicule à travers la face supérieure du tunnel 4 et une partie inférieure 6 située dans le tunnel 4 de façon à former avec la partie supérieure 5 un espace dans lequel se trouvent des organes du dispositif de commande qui seront définis ultérieurement. La partie supérieure 5 comprend notamment deux flasques latéraux sensiblement parallèles 5a portant à leur niveau supérieur l'axe 2 qui les traverse et qui se raccordent à une bride 5b venant en appui sous la paroi supérieure du tunnel 4 et permettant la fixation de la partie supérieure 5 au tunnel 4. La partie inférieure 6 comprend également une bride de fixation 6a solidarisée à la bride 5b de la partie supérieure 5. Les deux brides 5b et 6a sont fixées à la paroi du tunnel 4 par exemple par des vis de fixation 7 partiellement représentées.

Le levier de manoeuvre 1 a sa partie extrême opposée à sa poignée de manoeuvre 1a constituée de deux plaques parallèles ou joues 1b et 1c, traversées par l'axe 2 pour assurer le pivotement du levier de manoeuvre 1 et qui sont élastiquement déformables au moins au niveau de leurs extrémités.

Le dispositif de commande comprend de plus un secteur 8 monté pivotant sur l'axe de pivotement 2 du levier 1 et disposé entre les deux joues 1b, 1c du levier de manoeuvre 1. Le secteur 8 comporte sur sa portion circulaire une gorge (non référencée) reçevant un câble 9 d'actionnement du frein du véhicule traversant la partie inférieure 6 et entouré d'une gaine 10 dont l'embout 11 est en butée contre une paroi correspondante de la partie inférieure 6. Le câble 9 a son extrémité libre accrochée ou ancrée au secteur porte-câble 8 par exemple par une boulette 12 solidaire, par soudage ou sertissage, de cette extrémité libre et en butée contre une face correspondante su secteur porte-câble 8. Ce dernier est constitué de deux flasques latéraux parallèles 8a, 8b portées par l'axe 2 et disposés entre les deux joues 1b, 1c du levier 1. Les deux flasques 8a, 8b se joignent unitairement à l'opposé de l'axe 2 et portent à ce niveau deux pattes 8c, 8d alignées de part et d'autre du secteur 8 et perpendiculaires au plan médian du dispositif perpendiculaire à l'axe 2. Les deux pattes 8c, 8d, qui sont obtenues par exemple par pliage de deux portions respectivement des deux parties de flasques jointives du secteur porte-câble 8, ont leur bord externe 8c1, 8d1 incliné pour former une rampe ascendante dans le sens contraire des aiguilles d'une montre et coopérant avec une échancrure 1d, 1e réalisée à travers la joue correspondante 1b, 1c de façon à solidariser en rotation le secteur porte-câble 8 au levier de manoeuvre 1 comme il sera expliqué ultérieurement. Le secteur porte-câble 8 comporte de plus des organes de butée destinés à maintenir ce secteur en une position d'actionnement du frein du véhicule, représentée en figure 1, contre le levier de manoeuvre 1. Ces organes de butée comprennent deux ergots de butée 8e solidaires respectivement des deux flasques 8a, 8b du secteur 8 approximativement à l'opposé du point d'ancrage du câble 9 au secteur 8 et constitué par la boulette 12. Les deux ergots de butée 8e coopèrent avec une face de butée 1f du levier 1 pour le maintien du secteur 8 en position d'actionnement du frein du véhicule.

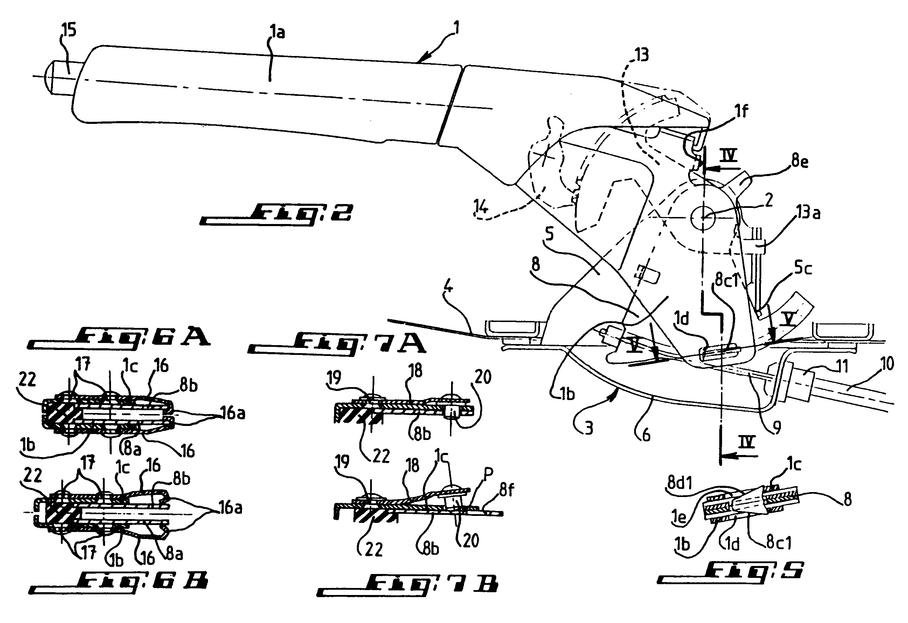

Lorsque le levier de manoeuvre 1 occupe la position approximativement horizontale de repos représentée en figure 2, le secteur porte-câble 8, qui est solidarisé au levier 1 par l'intermédiaire des pattes 8c, 8d engagées respectivement dans les deux échancrures 1d, 1e, est en butée contre une partie fixe correspondante 5c de la partie supérieure 5 du support 3.

Le dispositif de commande comprend également un secteur denté 13 centré sur l'axe 2 et fixé au support 3 par l'intermédiaire d'une queue 13a du secteur 13 immobilisée dans un trou 5d de la partie supérieure 5 du support 3. Sur le secteur denté 13 vient se bloquer un cliquet 14 porté pivotant par le levier de manoeuvre 1 lorsque ce dernier est notamment en position de serrage du frein du véhicule. Un bouton-poussoir 15 actionne un crochet (non représenté) logé dans la poignée 1a du levier 1 et coopère avec le cliquet 14 de manière à le libérer du secteur denté lorsqu'on desserre le frein du véhicule.

Les joues 1b, 1c et le secteur 8 du dispositif de commande sont en grande partie logés dans l'espace défini par les parties 5 et 6 du support 3.

La figure 1 représente la phase de montage du dispositif de commande, dont le levier de manoeuvre 1 est immobilisé en une position haute approximativement verticale par le cliquet 14 en position de blocage sur le secteur denté fixe 13. La levée du levier vers cette position haute est limitée par une butée 1g solidaire des deux joues 1b, 1c du levier 1 transversalement à celles-ci et venant en appui contre une face de butée 13b du secteur denté 13. En levant le levier 1, le secteur porte-câble 8 a été amené, par coopération des organes de butée 1f, 8e, à une position angulaire correspondant à une position d'actionnement du frein du véhicule. Le câble 9 préalablement accroché ou ancré au secteur 8 exerce alors une tension de préréglage dans le sens de la flèche F qui maintient le secteur 8 en appui contre le levier de manoeuvre 1 par les ergots 8e. Le dispositif de commande est ainsi verrouillé comme représenté en figure 1 et va pouvoir se positionner dans l'habitacle du véhicule à travers une ouverture 4a du tunnel 4 représenté partiellement en traits mixtes sur cette figure, la position approximativement verticale du levier de manoeuvre 1 permettant à l'ouverture 4a d'être de dimensions les plus réduites. Cette mise en place du dispositif de commande s'effectue, de préférence avec des moyens automatiques, par un mouvement de translation vertical entre le dispositif de commande et le tunnel 4 jusqu'à ce que le support 3 soit solidarisé par les vis de fixation 7 au tunnel 4. Une fois monté le dispositif de commande, la poignée 1a est ensuite tirée légèrement dans le sens des aiguilles d'une montre pour débloquer le cliquet 14 qui est dégagé du secteur dentée fixé 13 en enfonçant le bouton poussoir 15. Le câble 9, qui est prétendu, va alors entraîner simultanément ensemble le levier de manoeuvre 1 et le secteur porte-câble 8 par l'intermédiaire des ergots de butée 8e, ce qui correspond à un abaissement du levier 1 vers sa position de repos. Cet abaissement se poursuit jusqu'à ce que le secteur porte-câble 8 vienne en butée contre la face de butée 5c correspondant à un desserrage du frein de véhicule. Le secteur porte-câble 8 est ainsi immobilisé en rotation et, en continuant l'abaissement du levier 1 ou son pivotement dans le sens contraire des aiguilles d'une montre, les joues 1b, 1c du levier 1 se déplacent par rapport au secteur 8 par frottement sur celui-ci et s'écartent élastiquement respectivement sur les rampes 8c1, 8d1 comme indiqué par les flèches F1 et F2 en figure 4 jusqu'à ce que les pattes 8c et 8d s'engagent dans leurs échancrures respectives 1d et 1e, verrouillant ou solidarisant ainsi automatiquement et de manière irréversible le levier de manoeuvre 1 au secteur porte-câble 8. La butée 1g occupe sur le levier 1 une position telle qu'elle limite sa course d'abaissement en heurtant le secteur porte-câble 8 lorsque la position relative du levier 1 et du secteur 8 correspond à l'engagement des pattes 8c, 8d respectivement dans les échancrures 1d, 1e. La butée 1g participe ainsi à la solidarisation angulaire entre le levier 1 et le secteur 8. Le levier de manoeuvre 1 se trouve ainsi solidarisé au secteur porte-câble 8 de façon à permettre un usage normal du levier entre une position de repos (frein desseré) représentée en figure 2 et une position de serrage du frein représentée en figure 3. La figure 3 montre que les moyens de verrouillage 8c, 8d, 1d, 1e solidarisent le levier 1 au secteur 8 de telle manière qu'en position de serrage du frein le levier de manoeuvre 1 occupe une position inclinée ergonomique intermédiaire entre sa position approximativement horizontale de repos et la position approximativement verticale de montage représentée en figure 1.

Les figures 6A, 6B et 7A, 7B représentent deux autres modes de réalisation permettant le verrouillage du levier 1 au secteur porte-câble 8.

Suivant le mode de réalisation représenté aux figures 6A et 6B, deux lames flexibles élastiques 16 sont fixées, par exemple par des rivets 17, respectivement aux deux joues 1b, 1c du levier 1 et ont chacune une extrémité libre en forme de crochet de verrouillage 16a pouvant s'accrocher automatiquement, lors du déplacement des joues 1b, 1c relativement au secteur porte-câble 8 en position fixe, à un bord correspondant du secteur 8.

Suivant le mode de réalisation des figures 7A et 7B, les moyens de verrouillage comprennent également deux lames flexibles élastiques 18, dont une seule est représentée, fixée respectivement aux deux joues 1b, 1c du levier, par exemple par un rivet 19 et comportant à leur extrémité libre une pièce rapportée de verrouillage 20 sensiblement perpendiculaire à la lame 18 et s'engageant dans une ouverture correspondante 8f du secteur 8 à travers un passage correspondant P de la joue 1b, 1c.

Contre un bord du secteur 8 opposé aux crochets 16a ou à la pièce 20 de verrouillage, une butée souple 22 est maintenue serrée entre les deux flasques 8a, 8b. En position verrouillée (figures 6A et 7A), la butée est comprimée entre le levier 1 et le secteur 8, assurant leur solidarisation sans jeu. Une butée analogue peut être fixée sur un bord du secteur 8 au droit de la butée 1g.

Le dispositif ci-dessus décrit de l'invention ne nécessite ainsi qu'une ouverture de dimensions réduites pour le passage du levier de manoeuvre 1 et d'au moins une partie de sa structure de support lors de son montage. De plus, il est agencé de façon à prérégler la tension du câble du frein à main avant montage et n'utilise, en plus des usuels levier 1, secteur 8 et cliquet 14, que deux pièces mobiles au montage (joues du levier 1 ou lames flexibles 16, 18). Pendant toutes les manipulations nécessaires lors du montage du dispositif, le levier de manoeuvre 1 est maintenu verrouillé de lui-même à sa position approximativement verticale représentée en figure 1 et qui, par ailleurs, facilite le montage de certains équipements ou accessoires de finition situés à proximité de l'ouverture de passage 4a du tunnel 4.

## Revendications

1. Dispositif de commande d'un frein de stationnement d'un véhicule, du type comprenant un levier de manoeuvre (1) monté pivotant sur un axe fixe (2) et exerçant dans un sens de pivotement une traction sur un câble (9) relié au frein par l'intermédiaire d'un secteur (8) pivotant sur l'axe (2) de pivotement du levier de manoeuvre (1) et auquel est accroché le câble (9), et un secteur denté fixe (13) centré sur l'axe de pivotement (2) du levier de manoeuvre (1) et coopérant avec un cliquet (14) pivotant sur le levier de manoeuvre (1) de façon à assurer le maintien angulaire de ce dernier en une position approximativement horizontale de repos et une position inclinée d'actionnement du frein, le levier de maneouvre (1) étant, avant et lors du montage du dispositif sur le véhicule, immobilisé en une position haute approximativement verticale par le cliquet (14), et après ce montage, abaissé, après dégagement du cliquet (14) du secteur denté fixe (13), vers sa position de repos, caractérisé en ce qu'il comprend des moyens de verrouillage mécanique (8c, 8d, 1d, 1e ; 16, 16a ; 18, 20) solidarisant automatiquement de manière irréversible le levier de manoeuvre (1) au secteur porte-câble (8) lorsque le levier de manoeuvre est abaissé à sa position de repos.

2. Dispositif selon la revendication 1, caractérisé en ce que les moyens de verrouillage mécanique comprennent au moins une patte (8c; 8d) solidaire du secteur porte-câble (8), à bord incliné formant rampe (8c1; 8d1) s'engageant dans une échancrure (1d; 1e) d'une partie extrême (1b, 1c) déformable élastiquement du levier de manoeuvre.

3. Dispositif selon la revendication 2, caractérisé en ce qu'il comprend deux pattes (8c, 8d) à bords inclinés formant rampes (8c1, 8d1) solidaires de part et d'autre du secteur porte-câble (8) et s'engageant respectivement dans deux échancrures (1d, 1e) de deux parties extrêmes parallèles (1b, 1c) élastiquement déformables du levier de manoeuvre (1).

4. Dispositif selon la revendication 1, caractérisé en ce que les moyens de verrouillage comprennent au moins une lame flexible (16; 18) fixée à une partie extrême (1b; 1c) du levier de manoeuvre (1) et ayant son extrémité libre en forme de crochet de verrouillage (16a) ou comportant une pièce rapportée de verrouillage (20) pouvant respectivement s'accrocher à un bord du secteur porte-câble (8) ou s'engager dans une ouverture (8f) du secteur porte-câble (8).

5. Dispositif selon la revendication 4, caractérisé en ce qu'il comprend deux lames flexibles (16; 18) fixées respectivement à deux parties extrêmes sensiblement parallèles (1b, 1c) du levier de manoeuvre (1) et ayant chacune une extrémité libre en forme de crochet de verrouillage (16a) ou comportant chacune une pièce rapportée de verrouillage (20) pouvant respectivement s'accrocher à un bord correspondant du secteur porte-câble (8) ou s'engager dans une ouverture correspondante (8f) de ce secteur.

6. Dispositif selon l'une des revendications 3 à 5, caractérisé en ce que chaque partie extrême précitée (1b; 1c) est une joue du levier de manoeuvre (1).

7. Dispositif selon l'une des revendications 1 à 6, caractérisé en ce que des moyens de maintien du secteur porte-câble (8) en position d'actionnement du frein lorsque le levier (1) est en position haute comprennent des organes de butée (8e) constitués par deux ergots de butée solidaires du secteur porte-câble (8) et une face de butée (1f) du levier de manoeuvre (1) sur laquelle sont maintenus en appui, par la tension exercée par le câble (9) au secteur porte-câble (8), les deux ergots de butée (8e).

8. Dispositif selon l'une des revendications 1 à 7, caractérisé en ce que le levier de manoeuvre (1) comprend une butée (1g) venant en appui sur une face de butée correspondante (13b) du secteur denté fixe (13) de façon à limiter la levée du levier vers sa position haute.

9. Dispositif selon la revendication 8, caractérisé en ce que la butée (1g) précitée est positionnée de manière à (imiter l'abaissement du levier de manoeuvre (1) en heurtant le secteur porte-câble (8) lors du verrouillage du levier (1) au secteur porte-câble (8).

10. Dispositif selon l'une des revendications 1 à 9, caractérisé en ce que le secteur porte-câble (8), en position horizontale de repos du levier (1), est en butée contre une partie fixe correspondante (5c) du support (3) du dispositif.

## Claims

1. Device for the control of a parking brake of a vehicle, of the type comprising an operating lever (1) pivotally mounted onto a stationary pin (2) and exerting in one direction of pivoting a pull upon a cable (9) connected to the brake through the medium of a sector (8) pivoting onto the pivot pin (2) of the operating lever (1) and to which is hooked the cable (9) and a stationary toothed sector (13) centred on the pivot pin (2) of the operating lever (1) and co-operating with a pawl (14) pivoting on the operating lever (1) so as to ensure the angular holding of the latter in an approximately horizontal rest position and in an inclined brake actuating position, the operating lever (1) being before and during the mounting of the device onto the vehicle, held against motion in an approximately vertical upper position by the pawl (14) and after this mounting lowered after disengagement of the pawl (14) from the stationary toothed sector (13) towards its rest position, characterized in that it comprises mechanical locking means (8c, 8d, 1d, 1e; 16, 16a ; 18, 20) making the operating lever (1) automatically fast in an irreversible manner to the cable-carrying sector (8) when the operating lever is lowered to its rest position.

2. Device according to claim 1, characterized in that the mechanical locking means comprise at least one lug (8c; 8d) made fast to the cable-carrying sector (8) with an inclined ramp-like edge (8c1; 8d1) engaging a notch (1d; 1e) of an elastically deformable end portion (1b, 1c) of the operating lever.

3. Device according to claim 2, characterized in that it comprises two lugs (8c, 8d) with inclined edges forming ramps (8c1, 8d1) made fast on either side to the cable-carrying sector (8) and engaging two notches (1d, 1e), respectively, of two elastically deformable parallel end portions (1b, 1c) of the operating lever (1).

4. Device according to claim 1, characterized in that the locking means comprise at least one flexible strip (16; 18) fastened to one end portion (1b; 1c) of the operating lever (1) and having its free end shaped as a locking hook (16a) or comprising an inserted locking part (20) which may hook itself onto one edge of the cable-carrying sector (8) or engage an opening (8f) of the cable-carrying sector (8), respectively.

5. Device according to claim 4, characterized in that it comprises two flexible strips (16; 18) fastened to two substantially parallel end portions (1b, 1c), respectively, of the operating lever (1) and having each one one free end shaped as a locking hook (16a) or comprising each one an inserted locking part (20) which may hook itself onto a corresponding edge of the cable-carrying sector (8) or engage a corresponding opening (8f) of this sector, respectively.

6. Device according to one of claims 3 to 5, characterized in that each aforesaid end portion (1b; 1c) is one cheek of the operating lever (1).

7. Device according to one of claims 1 to 6, characterized in that means for holding the cable-carrying sector (8) in a brake actuating position when the lever (1) is in the upper position comprise stop means (8e) constituted by two abutment studs made fast to the cable-carrying sector (8) and an abutment face (1f) of the operating lever (1) upon which both abutments studs (8e) are held in bearing relationship by the tension exerted by the cable upon the cable-carrying sector (8).

8. Device according to one of claims 1 to 7, characterized in that the operating lever (1) comprises a stop (1g) caused to bear upon one corresponding abutment face (13b) of the stationary toothed sector (13) so as to limit the rise of the lever towards its upper position.

9. Device according to claim 8, characterized in that the aforesaid stop (1g) is positioned in a manner to limit the lowering of the operating lever (1) by hitting the cable-carrying sector (8) upon the locking of the lever (1) to the cable-carrying sector (8).

10. Device according to one of claims 1 to 9, characterized in that the cable-carrying sector (8) in the horizontal rest position of the lever (1) is in abutment against one corresponding stationary part of the support (3) of the device.

## Patentansprüche

1. Vorrichtung zur Steuerung einer Feststellbremse eines Fahrzeugs, derjenigen Gattung mit einem an einem ortsfesten Zapfen (2) schwenkbar angeordneten Betätigungshebel (1), der in der Schwenkrichtung einen Zug auf ein mit der Bremse über einen an dem Schwenkzapfen (2) des Betätigungshebels (1) schwenkbaren Sektor (8) verbundenes an dem Sektor angehaktes Drahtseil (9) ausübt und einem auf dem Schwenkzapfen (2) des Betätigungshebels (1) zentrierten und mit einer an dem Betätigungshebel (1) schwenkbaren Sperrklinke (14) zusammenwirkenden ortsfesten Zahnsektor (13), um das winkelmässige Halten des Hebels in einer annähernd waagerechten Ruhestellung und einer geneigten Bremsbetätigungsstellung zu gewährleisten, wobei der Betätigungshebel (1) vor dem Einbau und während des Einbaues der Vorrichtung an dem Fahrzeug in einer annähernd senkrechten oberen Lage durch die Sperrklinke (14) festgehalten und nach diesem Einbau nach Freisetzung der Sperrklinke (14) aus dem ortsfesten Zahnsektor (13) zu seiner Ruhestellung hin gesenkt wird, dadurch gekennzeichnet, dass sie mechanische Verriegelungsmittel (8c, 8d, 1d, 1e; 16, 16a; 18, 20) aufweist, die den Betätigungshebel (1) mit dem das Drahseil tragenden Sektor (8) in nicht umkehrbarer Weise selbsttätig verbinden, wenn der Betätigungshebel in seine Ruhestellung abgesenkt wird.

2. Vorrichtung nach Anspruch 1, dadurch gekennzeichnet, dass die mechanischen Verriegelungsmittel wenigstens einen mit dem Drahtseilträgersektor (8) fest verbundenen Ansatzlappen (8c; 8d) mit einem in einen Ausschnitt (1d; 1e) eines elastisch verformbaren Endteiles (1b, 1c) des Betätigungshebels eingreifenden rampenförmigen geneigten Rand (8c1; 8d1) aufweisen.

3. Vorrichtung nach Anspruch 2, dadurch gekennzeichnet, dass sie zwei beiderseits des Drahtseilträgersektors (8) fest verbundene und jeweils in zwei Ausschnitte (1d; 1e) von zwei parallelen elastisch verformbaren Endabschnitten (1b, 1c) des Betätigungshebels (1) eingreifende Ansatzlappen (8c, 8d) umfasst.

4. Vorrichtung nach Anspruch 1, dadurch gekennzeichnet, dass die Verriegelungsmittel wenigstens einen an einem Endteil (1b; 1c) des Betätigungshebels (1) befestigten biegsamen Streifen (16; 18) aufweisen, dessen freies Ende als Verriegelungshaken (16a) gestaltet ist oder ein angebrachtes Verriegelungsstück (20) aufweist, das sich jeweils an einem Rand des Drahtseilträgersektors (8) anhaken oder in eine Öffnung (8f) des Drahtseilträgersektors (8) eingreifen kann.

5. Vorrichtung nach Anspruch 4, dadurch gekennzeichnet, dass sie zwei jeweils an zwei etwa parallelen Endabschnitten (1b, 1c) des Betätigungshebels (1) befestigte biegsame Streifen (16; 18) umfasst, die jeweils ein verriegelungshakenförmiges freies Ende (16a) haben oder jeweils ein angebrachtes Verriegelungsstück (20) aufweisen, das jeweils sich an einem entsprechenden Rand des Drahtseilträgersektors (8) anhaken oder in eine entsprechende Öffnung (8f) dieses Sektors eingreifen kann.

6. Vorrichtung nach einem der Ansprüche 3 bis 5, dadurch gekennzeichnet, dass jeder vorgenannte Endabschnitt (1b; 1c) eine Wange des Betätigungshebels (1) ist.

7. Vorrichtung nach einem der Ansprüche 1 bis 6, dadurch gekennzeichnet, dass Mittel zum Halten des Drahtseilträgersektors (8) in der Bremsbetätigungsstellung, wenn der Hebel (1) in der oberen Stellung ist, durch zwei mit dem Drahtseilträgersektor (8) fest verbundene Zapfen und eine Anschlagfläche (1f) des Betätigungshebels (1) gebildete Anschlagglieder (8e) aufweisen, an welcher Fläche die beiden Anschlagzapfen (8e) durch die durch das Drahtseil (9) an dem Drahtseilträgersektor (8) ausgeübten Spannung in Abstützung gehalten werden.

8. Vorrichtung nach einem der Ansprüche 1 bis 7, dadurch gekennzeichnet, dass der Betätigungshebel (1) einen zur Abstützung an einer entsprechenden Anschlagfläche (13b) des ortsfesten Zahnsektors (13) kommenden Anschlag (1g) umfasst, um die Aufwärtsbewegung des Hebels zu seiner oberen Stellung hin zu begrenzen.

9. Vorrichtung nach Anspruch 8, dadurch gekennzeichnet, dass der vorgenannte Anschlag (1g) derart positioniert ist, um das Absenken des Betätigungshebels (1) durch Anstossen an dem Drahtseilträgersektor (8), während der Verriegelung des Hebels (1) an dem Drahtseilträgersektor (8) zu beschränken.

10. Vorrichtung nach einem der Ansprüche 1 bis 9, dadurch gekennzeichnet dass der Drahtseilträgersektor (8) in der waagerechten Ruhelage des Hebels (1) im Anschlag an einem entsprechenden ortsfesten Teil (5c) des Halters (3) der Vorrichtung ist.
